# EUROPÄISCHE PATENTSCHRIFT

(11) **EP 1 119 739 B1**
(45) Veröffentlichungstag und Bekanntmachung des Hinweises auf die Patenterteilung: **02.07.2003**
(21) Anmeldenummer: 99944622.2
(22) Anmeldetag: 07.09.1999
(51) Int. Cl.: G01B 11/30, G01N 21/88

(54) **VERMESSEN KLEINER, PERIODISCHER WELLIGKEITEN IN OBERFLÄCHEN**
MEASUREMENT OF SMALL, PERIODIC UNDULATIONS IN SURFACES
MESURE DE PETITES ONDULATIONS PERIODIQUES DANS DES SURFACES

(30) Priorität: 08.10.1998 DE 19846302
(43) Veröffentlichungstag der Anmeldung: 01.08.2001
(73) Patentinhaber: DaimlerChrysler AG, 70567 Stuttgart (DE)
(72) Erfinder: BAUMGART, Jörg, D-88682 Salem-Mimmenhausen (DE); RAU, Norbert, D-73230 Kirchheim (DE); TRUCKENBRODT, Horst, D-98693 Ilmenau (DE)
(86) Internationale Anmeldenummer: EP9906591
(87) Internationale Veröffentlichungsnummer: WO00022377

(56) Entgegenhaltungen:
- US-A- 3 782 827
- US-A- 3 850 526
- US-A- 5 189 490
- HAIMING WANG: "DIFFRACTION OF LIGHT FROM OPTICAL DISKS" OPTICAL ENGINEERING,US,SOC. OF PHOTO-OPTICAL INSTRUMENTATION ENGINEERS. BELLINGHAM, Bd. 34, Nr. 4, 1995, Seite 1098-1104 XP000497477 ISSN: 0091-3286

## Beschreibung

Die Erfindung betrifft ein Verfahren und eine Anordnung zum Erkennen und Vermessen periodischer, kleiner Welligkeiten in feingeschliffenen Oberflächen.

Die Besonderheit an geschliffenen Zylinderflächen besteht darin, dass einer durch die Körner der Schleifscheibe flächendeckend erzeugten, stochastischen Schleifstruktur je nach Beherrschung des Schleifprozesses eine mehr oder weniger ausgeprägte periodische "Drallstruktur" oder "Welligkeit" überlagert ist, bei der leichte Oberflächenwellen regelmäßig, also periodisch nebeneinander angeordnet sind. Bei diesen topographischen Begriffen "Schleifstruktur" im Sinne einer überlagerten stochastischen Feinstruktur einerseits und periodische "Drallstruktur" oder "Welligkeit" andererseits handelt es sich um Mikro-Abweichungen von der idealen Makroform der Oberfläche, jedoch unterscheiden sich die beiden Mikro-Strukturen hinsichtlich hier interessierender Kriterien zum einen durch das Ausmaß oder die Tiefe, mit dem sie am Werkstück auftreten. Zum anderen unterscheiden sich die beiden Mikro-Strukturen in formaler und statistischer Hinsicht. Die feinen, in aller Regel exakt in Umfangsrichtung ausgerichteten Schleifstrukturen weisen vergleichsweise steile Seitenflanken auf, treten aber ansonsten in ihrer Querschnittsform weitgehend stochastisch in Erscheinung. Dem gegenüber sind die beobachteten Drallstrukturen oder Welligkeiten wesentlich flacher an den Flanken und haben eine mehr oder weniger stark ausgeprägte periodische Formkomponente.

Nachdem die Anmelderin auf feinbearbeiteten Werkstückoberflächen unbeabsichtigte Welligkeiten der hier interessierenden Art mit einer Periodenlänge bis zu etwa 1,5 mm beobachten konnte und nicht auszuschließen ist, dass es noch größere Periodenlängen bei Welligkeiten der hier in Rede stehenden Art gibt, seien hier unter "kleinen Welligkeiten" solche mit einem gegegseitigen Abstand der Welligkeitsspitzen unterhalb von zwei Millimetern verstanden, wobei in den meisten Fällen die Periodenlänge deutlich unter einem Millimeter liegen wird.

Für eine sichere Dichtfunktion an Wellen-Durchtrittstellen durch Gehäusewandungen sind außer dem mit einer ringförmigen Radialdichtlippe versehenen Dichtring auch die Eigenschaften der wellenseitigen Gegenlauffläche mit zu berücksichtigen. Zur Herstellung glatter Oberflächen an derartigen Wellenzapfen können diese am Umfang geschliffen, feingedreht, glattgewalzt, rolliert oder außengerieben werden. Der Konstrukteur schreibt für den Wellenzapfen außer bestimmten Rauheitswerten auch noch Drallfreiheit der Oberfläche vor. Drallfrei beispielsweise von geschliffenen Oberflächen bedeutet, dass die Schleifstruktur exakt in Umfangsrichtung liegt und überlagerte regelmäßige Wellenanteile fehlen. Es ist jedoch in der heutigen Serienfertigung nicht nur problematisch, technische Oberflächen reproduziersicher drallfrei herzustellen, sondern es bereitet darüber hinaus Schwierigkeiten, eine solche Drallfreiheit sicher zu erkennen und gegebenenfalls eine Drallstruktur zu quantifizieren.

Die auf die Anmelderin zurückgehende DE 197 40 141 A1 beschreibt eine mechanisch arbeitende Tastschnittmethode zur Ermittlung und Quantifizierung von hier interessierenden Drallstrukturen oder Welligkeiten, die zu zuverlässigen und quantitativ umfassenden Aussagen bezüglich praktisch aller relevanten Parameter der Drallstruktur führt. Das bekannte Tastschnittverfahren führt insbesondere auch dann, wenn die Welligkeit nur gering ausgeprägt und/oder mit einem starken stochastischen Rauhigkeitsanteil überlagert ist, zu brauchbaren Ergebnissen, wenn man den stochastischen Rauheitsanteil aufgrund einer Autokorrelation der Oberflächendaten weitgehend eliminiert hat. Allerdings erfordert das bekannte Verfahren zur Generierung der Oberflächendaten einen hohen Zeitaufwand und muss mit großer Sorgfalt durchgeführt werden. Mit diesem Verfahren kann man daher nicht unmittelbar die Fertigung von technischen Oberflächen überwachen. Hingegen kann dieses Verfahren zur Kontrolle anderer Drallermittlungsverfahren als Referenzmethode eingesetzt werden.

In einer älteren Anmeldung der Anmelderin gemäß der nachveröffentlichten DE 198 09 790 A1 ist ein berührungsfrei optisch arbeitendes Verfahren beschrieben, bei dem die Rohdaten der zu untersuchenden Oberfläche aus einer unmittelbaren, vergrößerten Abbildung eines kleinen Ausschnittes der Oberfläche gewonnen werden. Das Verfahren arbeitet mit beliebigem Licht als Primärlichtart. Die damit beleuchtete Oberfläche wird unter Verwendung einer Abbildungsoptik scharf auf einer Mattscheibe oder auf einem Photodiodenarray hoher Auflösung abgebildet. Bei diesem Verfahren sind grobe und stark geneigte Drallstrukturen ohne weitere Verarbeitung der Bilddaten direkt aus dem visuellen Bildeindruck erkennbar. Derartige stark ausgeprägte Drallstrukturen sind jedoch dem geübten Auge auch so, d.h. lediglich bei geeigneter Beleuchtung und unter Zuhilfenahme einer Lupe, erkennbar. Derartige, grobe Fälle treten in der Praxis im übrigen selten auf und bereiten bezüglich ihrer Erkennbarkeit keine Probleme. Bei geringer ausgeprägten und/oder wenig geneigten Drallstrukturen müssen jedoch nach dem genannten Verfahren Bilddatensätze von mehreren benachbarten Oberflächenpartien generiert und diese lagerichtig zu einem einheitlichen Bilddatensatz vereinigt werden, wobei jeder einzelne Bilddatensatz zuvor jeweils einer Radontransformation unterworfen wird.

Zwar arbeitet das erwähnte Drallermittlungsverfahren gemäß der nachveröffentlichten DE 198 09 790 A1 schneller als die Tastschnittmethode, jedoch erfordert es in sofern ebenfalls eine gewisse Sorgfalt, als zum einen die Referenzlage des Werkstückes zur Messeinrichtung genau bekannt sein muss und als zum anderen Messgerät und Werkstück während der Messung absolut ruhig zueinander gehaltert werden müssen. In der bekannten Relativlage von Werkstückachse und Messeinrichtung müssen mehrere Aufnahmen in dichter Folge gemacht werden, was ebenfalls zeitaufwendig ist und Sorgfalt erfordert. Darüber hinaus erfordert auch die Auswertung in sofern eine gewisse Sorgfalt und Überwachung, als die einzelnen Bilder hinsichtlich einer einheitlichen mittleren Grauwertvereilung einander angepasst werden müssen. Das bekannte Verfahren liefert zwar Aussagen über den Abstand der Wellen und deren Neigung gegenüber einer Referenzrichtung. Aussagen über die Tiefe der Welligkeiten oder deren Querschnitt können mit dieser Methode jedoch nicht unmittelbar und nur mit Einschränkungen gewonnen werden. Mit dem bekannten Verfahren lässt sich im Labor an in begrenzter Zahl bereitgestellten Werkstücken das Vorhandensein oder Fehlen eines Oberflächendralls nachweisen, jedoch ist das Verfahren für einen Einsatz in der Fertigung weniger geeignet.

Die US-PS 3 850 526 zeigt ein Verfahren und eine Vorrichtung zur optischen Detektion der Rauhigkeit an Werkstückoberflächen. Bei dem bekannten Verfahren wird die Oberfläche mit einem Strahl von monochromatischem, kohärentem Licht - Primärlicht - beleuchtet und ein Beugungsbild der periodischen Oberflächenlinien (die von der Bearbeihung mit einem Schneidwarhzeug stammen) in dem von der Oberfläche zurückgeworfenen Sekundärlicht erzeugt wird. Dabei wird das Primärlicht unter einem großen Einfallwinkel zur Oberflächennormalen der Werkstückoberfläche und annähernd quer zu den zu erwartenden periodischen Oberflächenlinien auf die Werkstückoberfläche gerichtet und die Intensitätsverteilung des Beugungsbildes ausgewertet. Der einfallende Primärlichtstrahl wird dort unter einem feststehenden Winkel im Bereich von 80±5° zur Oberflächennormalen gehalten, wogegen der die reflektierte Sekundärstrahlkeule auswertende Auswertekanal konzentrisch um die Strahlauftreffstelle herum um 90° verschwenkt wird. Mittels der schwenkbaren Strahlanordnung wird das Intensitätsprofil der Beugungslichtkeule ermittelt und es werden die Beugungsordnung vollständig erfasst und in ihrem Intensitätsverlauf gemessen.

Die aus der US-PS 3 850 526 bekannte Art der Rauheitsmessung von Oberflächen ist nicht auf geschliffene Oberflächen gerichtet, bei denen zwei unterschiedliche Formstrukturen einander überlagert sind, von denen jedoch nur die eine interessiert. Das Beugungsbild der periodischen Welligkeiten könnte vom Speckle-Rauschen der stochastischen Schleifstrukturen bis zur Unkenntlichkeit überlagert werden.

Die US-PS 5 189 490 zeigt eine berührungsfrei arbeitende, optische Rauhigkeitsmessung von licht-reflektierenden, technischen Oberflächen nach der Streulichtmethode. Zwar wird hierbei ein Laserstrahl eingesetzt, wobei jedoch die extrem geringe Divergenz des Laserlichtes und nicht die für eine Beugungserscheinung des Lichtes an einem Beugungsgitter wichtige Kohärenz der Lichtwellen ausgenützt wird. Der Laserlichtstrahl soll unter einem bestimmten, allerdings in seiner Größe in keiner Weise festgelegten, zeichnerisch mit 65° dargestellten Einfallswinkel auf die Substratoberfläche eingestrahlt und an der zu untersuchenden Oberfläche reflektiert werden. Der reflektierte Sekundärstrahl wird in einer für die Rauhigkeitsstruktur der Oberfläche charakteristischen Weise gestreut oder divergiert. Die Streulichtkeule wird mittels eines Spiegels auf einen Bildschirm geworfen und dort abgebildet, so dass das Querschnittsbild der Streulichtkeule visuell ausgewertet, z.B. mit zuvor an Referenzmustern mit bekannter Rauhigkeit gewonnenen Bildern von Streulichtkeulen verglichen und in einen entsprechenden Fächer von Referenzmustern eingeordnet werden kann. Die so abgebildete Streulichtkeule ist in der Regel nicht ein diffuser Lichtfleck, sondern entsprechend der Mikro-Topographie der Substratfläche an der Auftreffstelle des Primärlichtstrahles ein Muster von mehreren, voneinander unterscheidbaren, lokalen Intensitäten. Das auf dem Bildschirm projizierte Querschnittsbild der Streulichtkeule wird darüber hinaus von einer Digitalkamera aufgenommen und in einen digitalen Bilddatensatz umgewandelt. Aus diesem Bilddatensatz kann nach einem empirisch durch Vergleichsmessungen zu findenden Algorithmus die Rauhigkeit der aktuellen Probefläche errechnet werden. Der Algorithmus wird aus einer Kalibrierkurve entwickelt, der diese in Form einer mathematischen Gleichung wiedergibt. Die Kalibrierkurve ihrerseits wird aus konventionell, z.B. nach einer Tastschnittmethode ermittelten Rauhigkeit der Referenzmuster einerseits und den rechnerisch an diesen Referenzmuster ermittelten "Rauhigkeitswerten" andererseits erstellt. Das bekannte Verfahren bzw. die entsprechende Vorrichtung ist auf unterschiedliche, herstellungsbedingte Oberflächentypen anwendbar, wobei allerdings das Verfahren zuvor anhand eines Fächers von typgleichen Oberflächenmustern unterschiedlicher Rauhigkeit kalibriert und der entsprechende Algorithmus erstellt worden sein muss.

Die US-PS 3 782 827 zeigt ein ebenfalls nach der Streulichtmethode arbeitendes Vergleichsverfahren zur Ermittlung der Rauhigkeitsstruktur von technischen Oberflächen. Dieses Messverfahren liefert lediglich ein gewisses Ist-Muster einer Streulichtverteilung des jeweiligen Probanden. Durch Ähnlichkeitsvergleich anhand einer Vielzahl abgespeicherter Referenzmustern kann nur mittelbar eine Aussage getroffen werden, ob oder ob nicht der untersuchte Proband eine ähnliche Oberflächentopographie hat, wie eine bekannte Probe.

Ausgehend von dem geschilderten Stand der Technik besteht die Aufgabe der Erfindung darin, ein fabrikationstaugliches Verfahren bzw. eine entsprechende Anordnung anzugeben, mit dem bzw. der eine etwaige Welligkeit in feingeschliffenen Oberflächen, die von feineren, steil eingekerbten, stochastischen Schleifstrukturen überlagert ist, rasch, freihändig und mit reproduzierbarer Aussagekraft nachgewiesen werden kann. Insbesondere soll eine exakte relative Ausrichtung von Werkstück und Gerät für das Messergebnis nicht mehr erforderlich sein; trotzdem soll aber selbst bei einer relativ unruhigen Handhalterung sowohl des Werkstücks als auch des Gerätes eine hinreichende Stabilität des Messbildes gewährleistet sein. Dabei soll eine einzige Messung nicht nur zu einer zuverlässigen qualitativen Aussage führen, ob eine periodische Oberflächenwelligkeit "vorhanden" oder "nicht vorhanden" ist, sondern es sollen gegebenenfalls - bei entsprechender Bilddatenauswertung - auch quantitative Aussagen über die Periodenlänge und die Tiefe der Welligkeit möglich sein.

Diese Aufgabe wird bezüglich des Verfahrens erfindungsgemäß durch die Gesamtheit der Merkmale von Anspruch 1 und bezüglich der entsprechenden Anordnung durch die Gesamtheit der Merkmale von Anspruch 5 gelöst.

Erfindungsgemäß wird mittels monochromatischem, kohärentem Licht, welches die Wellenkämme der Oberfläche quer zu ihrer Längserstreckung bei großem Einfallswinkel - annähernd streifender Einfall - trifft, unter Ausnutzung der Beugung an der wellenförmigen Oberflächenstruktur als Beugungsgitter ein Beugungsbild erzeugt und die Intensitätsverteilung in demselben ausgewertet. Durch den großen Einfallwinkel des Lichtes wird der Einfluss des Streulichtes der stochastischen Schleifstruktur im Beugungsbild weitgehend eliminiert. Das Beugungsbild steht ungeachtet einer mehr oder weniger guten Ruhighaltung der Messeinrichtung relativ zum Werkstück stabil und ruhig. Außerdem hängt die Qualität des Beugungsbildes innerhalb vernünftiger Grenzen nicht von der relativen Ausrichtung von Werkstück und Meßeinrichtung ab. Aus dem Auftreten eines lokalen Intensitätsmaximums in der Streulichtkeule kann sofort erkannt werden, daß eine Drallstruktur vorliegt. Aus dem Abstand mehrerer Maxima - es handelt sich dabei um unterschiedliche Beugungsordnungen - kann auf die Abstände der Wellenkämme geschlossen werden. Dabei verhalten sich die Abstände der Intensitätsmaxima annähernd umgekehrt proportional zu den Wellenkamm-Abständen, d.h. eine sehr dichte Folge von Wellenkämmen ruft in der Intensitätsverteilung der Streulichtkeule weit beabstandete Helligkeitsmaxima hervor, wogegen im Fall größerer Abstände der Wellenkämme die Intensitätsmaxima dichter beieinander liegen. Unter Auswertung der Intensitäten der verschiedenen Beugungsordnungen und der Periodenlänge kann sogar auf die Tiefe der Wellentäler geschlossen werden. Hingegen ist es bei der vorliegenden Erfindung problematisch, Informationen über die Winkellage der Welligkeiten in Relation zur exakten Umfangsrichtung zu bekommen.

Vor einer näheren Erläuterung der Erfindung seien zur Terminologie noch einige Bemerkungen gemacht. Es ist zum einen mehrfach von "Primärlicht" und "Sekundärlicht" und zum anderen von einem "Beugungsbild" im Sekundärstrahl die Rede. Bei dem hier verwendeten Begriff "Primärlicht" handelt es sich um Licht, welches auf die zu untersuchende Werkstückoberfläche eingestrahlt wird, also um einfallendes Licht. Beim "Sekundärlicht" handelt es sich nicht etwa um Licht einer Fluoreszenzerscheinung, sondern um das von der Werkstückoberfläche zurückgeworfene, gestreute, gebeugte oder reflektierte Licht. Es soll ferner trotz Verwendung des Begriffes "Beugungsbild" nicht der Gedanke vermittelt werden, daß es sich vorliegend um ein bildgebendes Verfahren oder eine bildgebende Vorrichtung handelt. Durch die wellige Oberflächenstruktur wird das Primärlicht gebeugt und im Sekundärstrahl eine der Beugung entsprechende Intensitätsverteilung hervorgerufen. Die spezifische Art der jeweiligen Intensitätsverteilung dieser Beugung ist mit "Beugungsbild" gemeint. Eine bildhafte Darstellung des "Beugungsbildes" zur Auswertung dieser Intensitätsverteilung z.B. durch bildgebende Objektive o.dgl. ist nicht nur unnötig, sondern wäre geradezu abwegig. Zur visuellen Intensitätsauswertung genügt das unmittelbare Einfangen des "Beugungsbildes" auf einer Mattscheibe.

Zweckmäßige Ausgestaltungen der Erfindung können den abhängigen Ansprüchen entnommen werden; im übrigen ist die Erfindung anhand zeichnerisch dargestellter Ausführungsbeispiele nachfolgend noch erläutert; dabei zeigen:
- Fig. 1: eine perspektivische Darstellung eines Handgerätes zur erfindungsgemäßen Überprüfung von Werkstückoberflächen bezüglich periodischer Welligkeiten mit visueller Bewertung des Sekundärlichtes,
- Fig. 2: einen Querschnitt durch den unteren Teil des Handgerätes nach Figur 1,
- Fig. 3: ein in einem Stativ oberhalb einer Werkstückaufnahme gehaltertes Handgerät nach Figur 1 mit einer über einen Adapter angedockten Digitalkamera,
- Fig. 4: einen stark vergrößerten und stark überhöht dargestellten Querschnitt durch einen kleinen Ausschnitt einer Werkstückoberfläche, wobei ein kleiner Ausschnitt daraus noch stärker vergrößert herausgehoben ist,
- Fig. 5: ebenfalls einen stark vergrößert und überhöht dargestellten Querschnitt durch einen Ausschnitt einer anderen Werkstückoberfläche mit zwei überlagerten periodischen Welligkeiten unterschiedlicher Wellenlänge,
- Fig. 6: die bei der Beobachtung der Werkstückoberfläche nach Figur 5 mit dem Handgerät nach Figur 1 erhältliche Anzeige des Beugungsbildes,
- Fig. 7: im oberen Bildteil (a) eine helligkeits-invers dargestellte, flächige Helligkeitsverteilung eines Beugungsbildes und im unteren Bildteil (b) ein dazu gehöriges Diagramm, das den Verlauf der Intensität entlang der Linie b-b im Bildteil (a) darstellt und
- Fig. 8: ein den Zusammenhang einer aus den Intensitätswerten i₁ und i₂ ermittelten Hilfsgröße k, der Periodenlänge L der Welligkeit und der Wellentiefe T zeigendes Diagramm, welches zur Ermittlung der Wellentiefe T verwendet wird.

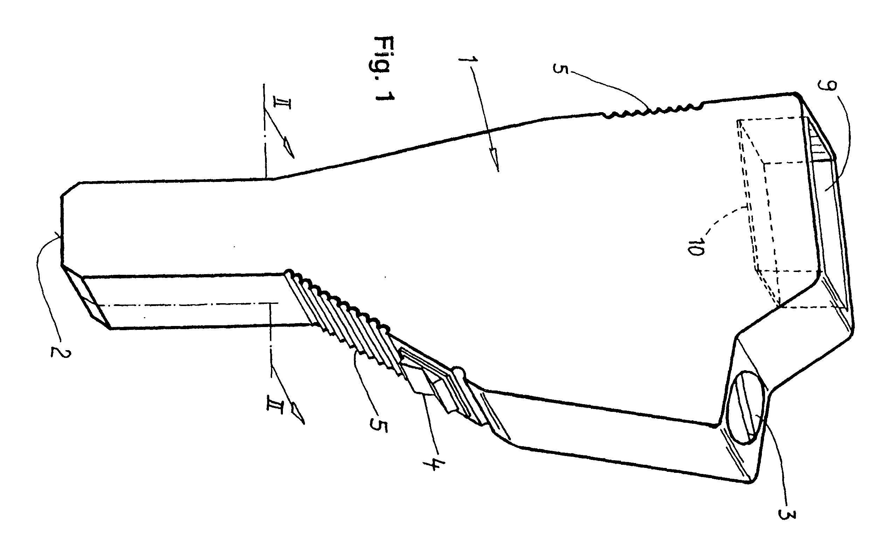

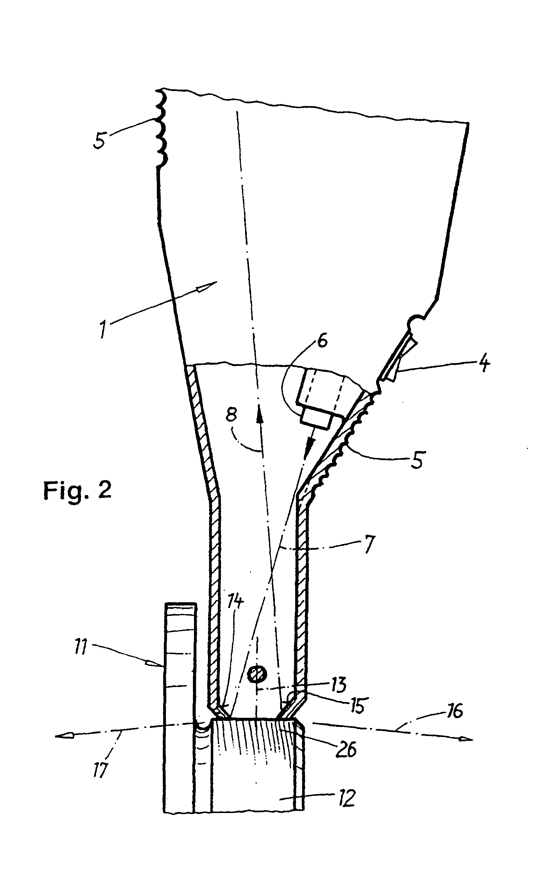

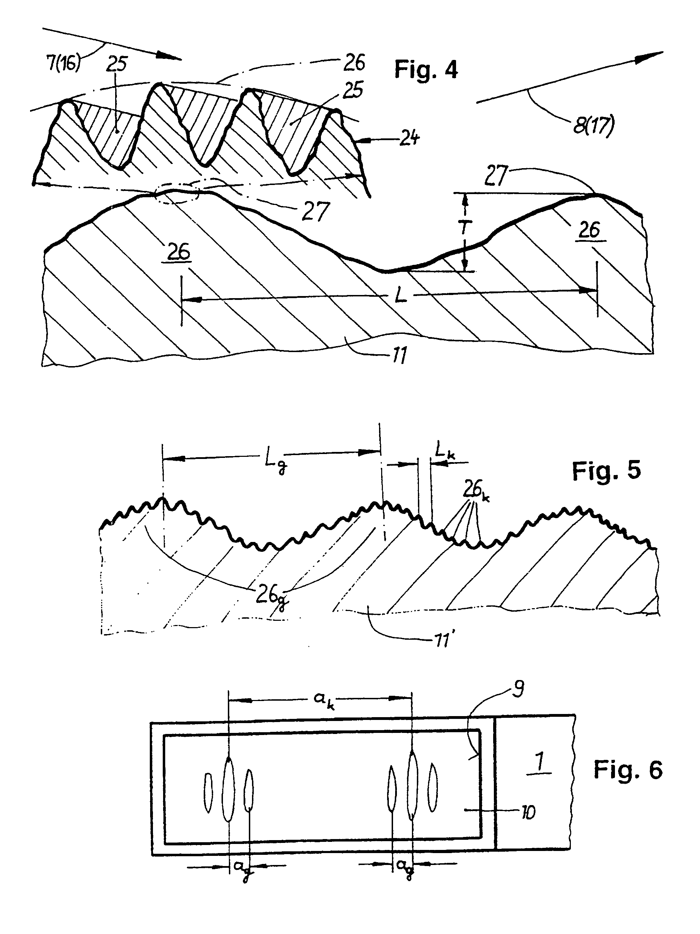

Die Figuren 1 und 2 zeigen ein Handgerät 1 zum Erkennen kleiner, periodischer Welligkeiten 26 (Figur 4 oder 5) in der Oberfläche 12 eines Werkstücks 11, welches nach der Streulichtmethode arbeitet. Es wird auf die zu untersuchende Werkstückoberfläche 12 definiert aufgesetzt. Ein von einer Primärlichtquelle ausgehendes Lichtbündel - Lichtwelle - wird unter einem Winkel von 83±2 Grad auf die Werkstückoberfläche gerichtet und die von der Werkstückoberfläche zurückgeworfene Streulichtkeule in einer Sekundärlicht-Anzeige der Meßvorrichtung einfangen.

Um das Handgerät fabrikationstauglich zu machen und mit ihm auf einfache Weise rasch, freihändig und mit reproduzierbarer Aussagekraft kleine, periodische Welligkeiten erkennen zu können, ist es erfindungsgemäß auf folgende Weise ausgebildet:

Das ergonomisch zweckmäßig gestaltete und mit einem leichten Kunststoffgehäuse versehene Handgerät 1 ist handlich und kann aufgrund der erfindungsgemäßen Wirkungsweise auch manuell geführt werden und liefert gleichwohl standsichere Meßbilder. In das Handgerät ist als Primärlichtquelle eine Laserdiode 6 mit integrierter Kollimationsoptik eingebaut, die einen monochromatischen, kohärenten Primärlichtstrahl 7 aussendet. Grundsätzlich käme auch ein He/Ne-Laser als Primärlichtquelle in Frage, der jedoch nicht so kompakt wie eine Laserdiode ist und für Handgeräte der vorgestellten Art von der Baugröße her nicht zu empfehlen ist. Eine Leistung der Schutzklasse I für leistungsschwache Lasergeräte ist für die vorliegenden Zwecke ausreichend. In das Handgerät ist ein durch eine Tellerschraube 3 verschließbares Batteriefach integriert. Die darin aufgenommene Mignon-Zelle liefert die Energie für das Primärlicht, welches mittels eines griffgünstig neben einer geriffelten Greiffläche 5 angeordneten Schalters 4 bedarfsweise ein- uns ausgeschaltet werden kann.

Im Bereich des Austritts des Primärlichtstrahls 7 aus dem Handgerät 1 ist eine Aufsetzfläche 2 zum Aufsetzen des Gerätes auf die zu untersuchende Werkstückoberfläche 12 am Gerätegehäuse vorgesehen. Da Untersuchungen an mehr oder weniger stark gekrümmten und auch an ebenen Oberflächen durchgeführt werden sollen, ist beim dargestellten Ausführungsbeispiel die Aufsetzfläche eben gestaltet und mit einer kleinen Stahlplatte armiert, die das Austrittsfenster umschließt. Im Bereich dieses Austrittsfensters bewirkt der Umlenkspiegel 14 die Ablenkung des Primärstrahls 7, so daß er bei ordnungsgemäßem Aufsetzen der Meßvorrichtung 1 auf das Werkstück 11 annähernd streifend (Einfallsrichtung 16) auf die -zu untersuchende Werkstückoberfläche 12 auftrifft. Und zwar trifft der Primärlichtstrahl 7 unter einem bestimmten, großen Einfallswinkel auf die zu untersuchende Werkstückoberfläche 12 auf, der - zur Oberflächennormalen 13 gemessen innerhalb eines Bereichs von 83±2 Grad liegt. Aufgrund der ebenen Ausgestaltung der Aufsetzfläche 2 des Handgerätes kann diese nach dem Aufsetzen auf die Werkstückoberfläche durch leichtes Schwenken des Gerätes um die Hochachse bezüglich des Primärstrahls 7 zumindest annähernd quer zu etwaigen, zu erwartenden periodischen Welligkeiten 26 der Werkstückoberfläche 12 ausgerichtet werden. Im Sekundärlichtbereich sind - abgesehen von einem Umlenkspiegel - keine optischen Einbauteile, also beispielsweise keine Abbildungs- oder Fokussierungsoptik od.dgl., im Handgerät vorgesehen. Die Sekundärlicht-Anzeige fängt das vom Primärlicht an der wellenförmigen Struktur der Werkstückoberfläche hervorgerufene Beugungsbild unmittelbar ein. Zur Ermittlung etwaiger periodischer Welligkeiten in der Werkstückoberfläche wird die Intensitätsverteilung des Beugungsbildes ausgewertet.

Da die zu detektierenden Welligkeiten der meist zylindrischen Werkstückoberflächen in Umfangsrichtung orientiert sind, muß die Achse des einfallenden Primärstrahls zumindest angenähert in einer die Zylinderachse einschließenden Ebene liegen. Um das Handgerät auf relativ kurzen und vertieft liegenden Bauteilflächen in axialer Richtung (Figur 2) ordnungsgemäß aufsetzen zu können, muß das Handgerät im Bereich des Austrittsfensters raumsparend gestaltet sein. Deshalb ist der Primärstrahl 7 und der Sekundärstrahl 8 in der Weise raumsparend in dem Handgerät abgewinkelt, daß der vordere Primärstrahl-Anteil und der hintere Sekundärstrahl-Anteil im wesentlichen quer zur Werkstückoberfläche 12 ausgerichtet sind. Zu diesem Zweck ist seitlich in der Begrenzung des Austrittsfensters, d.h. in geringem Abstand von der Auftreffstelle des Primärstrahls 7 auf der Werkstückoberfläche, jeweils ein kleiner Umlenkspiegel 14 für den Primärstrahl und ein weiterer kleiner Umlenkspiegel 15 für den Sekundärstrahl angeordnet. Um den unteren Teil des Gehäuses, den Strahlenschacht in Axialrichtung des Bauteils 11 gesehen besonders kurz gestalten zu können, sind beim dargestellten Ausführungsbeispiel die Umlenkspiegel 14, 15 derart angeordnet, daß der vor dem Primärstrahl-Umlenkorgan 14 liegende Strahlanteil des Primärstrahls 7 einerseits und der hinter dem Sekundärstrahl-Umlenkorgan 15 liegende Strahlanteil des Sekundärstrahls 8 andererseits sich gegenseitig mit einem relativ kleinen Winkel überkreuzen. Durch diese Strahlanordnung kann nicht nur eine besonders platzsparende Bauweise im vorderen Teil des Handgerätes erzielt werden, sondern es kann damit auch die Anzahl der erforderlichen Strahlumlenkungen minimal gehalten werden, was außer einem möglichst geringen Verlust an Lichtausbeute nicht nur Kosten- und Gewichtsvorteile, sondern auch Wartungs- und Justagevorteile mit sich bringt.

Anstelle der Umlenkspiegel kann auch ein Umlenkprisma eingesetzt werden. Das Umlenkprisma könnte gegebenenfalls in vorteilhafter Weise mit der erwähnten Armierungsplatte zur Begrenzung des Austrittsfensters zu einer in sich stabilen Baugruppe vereinigt sein.

Bei dem Handgerät 1 ist die Sekundärlicht-Anzeige als Mattscheibe 10 ausgebildet, die die Intensitätsverteilung des Beugungsbildes unmittelbar sichtbar macht, so daß es visuell bewertet und in Ansätzen sogar ausgewertet werden kann. Die auf der Mattscheibe erkennbare Intensitätsverteilung des Beugungsbildes steht trotz einer gewissen Handunruhe seites des Werkstückes und/oder seitens des Handgerätes sehr ruhig auf der Mattscheibe. Zur Abschattung von störendem Fremdlicht ist die.Mattscheibe vertieft am Grunde eines Beobachtungsschachtes 9 angeordnet. Dieser kann auch zur Adaptierung eines Fotodetektors oder einer Digitalkamera an das Handgerät ausgenutzt werden.

Zur quantitativen Auswertung des Beugungsbildes muß die Intensität in demselben gemessen werden. Dazu ist eine Fotodetektorzeile oder eine Fotodetektormatrix vorzusehen. Ein solcher Fotodetektor ist in dem in den Figuren 1 und 2 dargestellten Ausführungsbeispiel nicht vorgesehen. Es ist jedoch denkbar, anstelle der Mattscheibe 10 einen solchen Fotodetektor vorzusehen. Dafür kommen z.B. CCD-Zeilen oder CCD-Matrizen, Spektrometerzeile oder -matrizen, andere Fotodiodenzeilen oder -matrizen o.dgl. in Frage. Dabei wäre es allerdings zweckmäßig, in der Sekundärlicht-Anzeige sowohl eine Mattscheibe, auf der die Intensitätsverteilung des Beugungsbildes unmittelbar aufgefangen und wahrgenommen werden kann, als auch einen Fotodetektor der genannten Art, mit der die Intensitätsverteilung im Beugungsbild ortsabhängig meßbar ist, anzuordnen. Hierbei könnte der Sekundärstrahlengang der Mattscheibe einerseits bzw. dem Fotodetektor andererseits über einen Strahlteiler - simultan - oder über einen Klappspiegel - nacheinander - zugeleitet werden. Die mit dem Fotodetektor gemessenen Intensitäten können mit einem beigestellten Computer ausgewertet werden. Eine andere Möglichkeit zur Meßwert-Auswertung und -Anzeige besteht in einer Koppelung des Fotodetektors mit einem digitalen Signalprozessor und einer LCD-Anzeige. Der Vorteil der zuletzt genannten Variante besteht in einer kompakten Ausführung des Meßgerätes einschließlich zugehöriger Datenverarbeitung ohne eine zusätzliche Computereinheit.

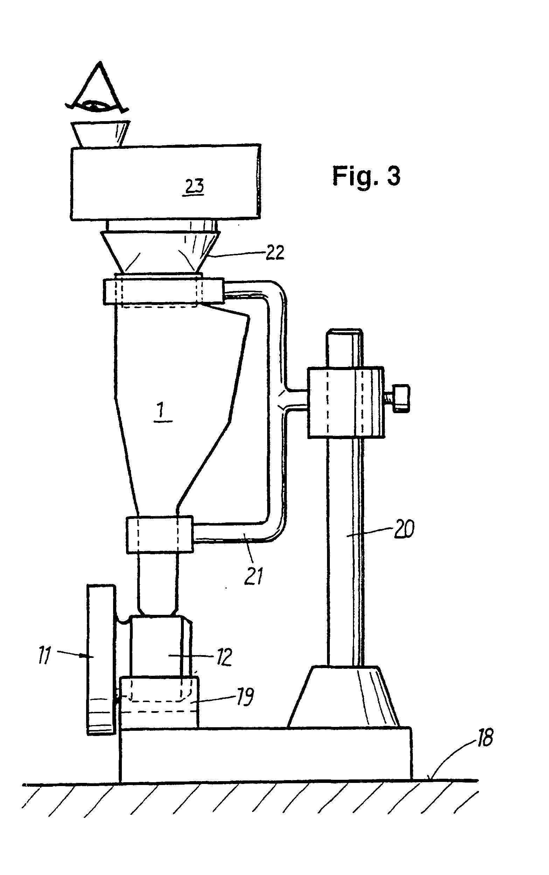

In Figur 3 ist noch eine andere Möglichkeit zur gezielten Auswertung des Sekundärlichtes dargestellt, welche das Handgerät mit ausnutzt. Dort ist das Handgerät 1 mittels einer Haltevorrichtung 21 und einem Stativ 20 auf einem Tisch 18 oberhalb eines Einlegeprismas 19 für ein Werkstück 11 stationär gehaltert. In den Beobachtungsschacht 9 des Handgerätes 1 (siehe Figur 1) ist ein Adapter 22 lagestabil eingesetzt, mit dem eine digital arbeitende Kamera 23 an das Handgerät adaptiert ist. Die Digitalkamera, die anstelle ihres Objektives den Adapter 22 trägt, kann bedarfsweise vom Handgerät nach oben abgezogen bzw. aufgesteckt werden. Bei aufgesteckter Digitalkamera muß die Mattscheibe entfernt werden. Das Sekundärlicht kann dann am Sucher der Digitalkamera beobachtet werden. Mit der Aufnahmetechnik der digital arbeitenden Kamera kann die Intensitätsverteilung des Beugungsbildes des Sekundärstrahlenganges 8 als datenverarbeitbarer Bilddatensatz auf einem speziellen, kameraintegrierten aber herausnehmbaren Datenträger aufgenommen und darauf gespeichert werden.

Die aufgenommenen Bilddaten können auf verschiedene Weise von der Fabrikationsstätte zu einem Auswertelabor weiter gegeben werden, von wo der Befund, nämlich die Parameterwerte der Welligkeitsstruktur der Oberfläche, zur Fabrikationsstätte zurück übermittelt werden kann. Der Versand der Bilddaten kann auf Datenträger, nämlich auf dem speziellen Kamera-Datenträger oder - nach Überspielen auf eine herkömmliche Diskette - auf einer solchen Diskette als Datenträger erfolgen. Die Bilddaten können aber auch im Wege der Datenfernübertragung per Leitung zum Auswertelabor übermittelt werden.

Nachfolgend soll noch auf die Vorgehensweise beim Erkennen und gegebenenfalls quantitativen Ermitteln der OberflächenWelligkeiten mit dem beschriebenen Gerät unter Bezugnahme auf die stark vergrößert und überhöht dargestellten Oberflächenstrukturen nach den Figuren 4 und 5 näher eingegangen werden. Die z.B. umfangsgeschliffene Oberfläche des Werkstückes 11 (Figur 4) bzw. 11' (Figur 5) ist in diesen ausschnittsweisen Darstellungen in ihrer Makrogestalt als durchgehende Fläche gar nicht mehr erkennbar.

In diesem Zusammenhang sollen zunächst zwei hier verwendete topographische Begriffe, nämlich "Schleifstruktur" im Sinne einer überlagerten stochastischen Feinstruktur einerseits und periodische "Drallstruktur" oder "Welligkeit" andererseits erläutert werden. Bei beiden Begriffen handelt sich um Mikro-Abweichungen von der idealen Makroform der Oberfläche, jedoch unterscheiden sich die beiden Mikro-Strukturen hinsichtlich hier interessierender Kriterien zum einen durch das Ausmaß oder die Tiefe, mit dem sie am Werkstück auftreten. Zum anderen unterscheiden sich die beiden Mikro-Strukturen in formaler und statistischer Hinsicht. Die feinen, in aller Regel exakt in Umfangsrichtung ausgerichteten Schleifstrukturen 24 (siehe Figur 4) weisen vergleichsweise steile Seitenflanken auf, treten aber ansonsten in ihrer Querschnittsform weitgehend stochastisch in Erscheinung. Dem gegenüber sind die beobachteten Drallstrukturen oder Welligkeiten 26 wesentlich flacher an den Flanken und haben eine mehr oder weniger stark ausgeprägte periodische Formkomponente. Typischerweise ist einer periodischen Welligkeit oder Drallstruktur 26 eine aus vielen kleinen stochastischen Einkerbungen gebildete Schleifstruktur 24 mit steileren Flanken und wesentlich kleineren Tiefenabmessungen als der Welligkeit überlagert.

In dem Profil nach Figur 4 sind Wellen 26 regelmäßig, also periodisch nebeneinander angeordnet. Aufgrund der stark überhöhten Darstellung des Rauheitsprofils ist die als Pfeil dargestellte Anstrahlung-Richtung 16 nicht mehr winkelgetreu, d.h. die flach einfallende Primärstrahlung 8 erreicht auch noch den Grund der Täler und die lichtabgewandte Seitenflanke der Welligkeiten. Bei dieser annähernd streifenden Ausleuchtung werden hingegen die steil eingeschnittenen Einkerbungen der Schleif- oder Feinstruktur 24 weitgehend abgeschattet (Abschattungszonen 25), so daß sie das zurückgeworfene Licht nur in einem sehr geringen, praktisch vernachlässigbarem Ausmaß beeinflussen können. Demgegenüber wird die wesentlich flachere Drallstruktur 26 weitgehend ausgeleuchtet. Dadurch tritt die an der wellenförmigen Drallstruktur hervorgerufene Beugung des monochromatischen und kohärenten Primärlichtes wesentlich stärker gegenüber einer überlagerten Beugung an der Schleifstruktur 24 in Erscheinung. Die nullte Beugungsordnung liegt in der Richtung 17 des Sekundärstrahles 8, die der an der idealen Makro-Oberfläche direkt reflektierten Ablenkrichtung entspricht. Falls die Oberfläche wellig ist und Beugung auftritt, ist in einem gewissen Abstand neben der nullten Beugungsordnung in der Regel noch eine weitere, die erste Beugungsordnung im Beugungsbild wahrnehmbar.

Die von den verschiedenen Wellenkämmen 27 ausgehenden, in der Tiefe gestaffelt liegenden Wellenfronten interferieren miteinander und rufen in dem Sekundärlicht ein Beugungsbild hervor, von denen wenigstens die nullte und die erste Beugungsordnung als Intensitätsmaxima erkennbar sind. Wenn keine periodischen Welligkeiten auf der Oberfläche vorhanden sind, kommt es auch nicht zur Ausbildung eines Beugungsbildes im Sekundärlicht. In diesem Fall sind auch nicht zwei beabstandete Intensitätsmaxima wahrnehmbar. Aus dem Auftreten zweier unterscheidbarer Intensitätsmaxima kann also zuverlässig auf ein "reflektierendes Beugungsgitter", nämlich auf eine Folge von periodischen Wellen in der zu untersuchenden Oberfläche geschlossen werden.

Andere Oberflächenstrukturen rufen andere Intensitätsverteilungen im Sekundärlicht hervor. Beispielsweise wird eine ideal spiegelnde Oberfläche die Intensitätsverteilung des Primärstrahles auch im Sekundärstrahl wiedergeben. Es wird in einem solchen Fall nur eine einzige Hellstelle im Sekundärlicht wahrnehmbar sein. Bei einer durchweg stochastisch rauhen Oberfläche ohne periodische Welligkeiten wird eine gleichmäßige Intensitätsverteilung mit mehr oder weniger stark ausgeprägter Speckle-Struktur beobachtet.

An dieser Stelle sei der Vollständigkeit halber noch erwähnt, daß die Hellstellen je nach Stärke der Krümmung der zylindrischen Oberfläche 12 als mehr oder weniger stark in Axialrichtung verzerrte Ovale erscheinen; bei kleineren Zylinderdurchmessern kann die lange Achse des Ovals größer sein als die entsprechende lichte Weite der Mattscheibe, so daß die Hellstelle als heller Strich erscheint.

Am Beispiel der beiden Figuren 5 und 6 soll nun erläutert werden, daß mit der erfindungsgemäßen Methode auch auf die Periodenlänge der regelmäßigen Welligkeit geschlossen werden kann. Die in Figur 5 vergrößert dargestellte Textur der Oberfläche des Werkstückes 11' weist zwei überlagerte periodische Welligkeiten stark unterschiedlicher Periodenlänge auf, nämlich kleine Wellen 26ₖ mit einer kleinen Periodenlänge Lₖ und große Wellen 26_{g} mit einer großen Periodenlänge L_{g}. Beim "Betrachten" dieser Oberfläche mit dem Handgerät 1 zeigt sich auf dessen Mattscheibe 10 das in Figur 6 gezeigte Bild. Es sind zwei in Streifen aufgelöste Intensitätsmaxima mit einem relativ großen gegenseitigen Abstand aₖ erkennbar, die der Welligkeit der kleinen Wellen 26ₖ zuzuordnen ist. Die einzelnen Streifen der beiden Intensitätsmaxima haben untereinander einen relativ geringen Abstand a_{g}, der zur Welligkeit der großen Wellen 26_{g} gehört.

Zwischen dem Abstand a der Intensitätsmaxima innerhalb des Beugungsbildes des Sekundärlichtes und der Periodenlänge L der Welligkeit besteht ein angenähert umgekehrt proportionaler Zusammenhang: Je kleiner der Abstand a der Hellstellen, desto größer ist die Periodenlänge L der Welligkeit und umgekehrt. Aus dem Abstand a der Intensitätsmaxima kann nach der Beziehung a ≈ f/L die Periodenlänge L mit guter Annäherung ermittelt werden. Der darin enthaltene Faktor f ist eine Gerätekonstante, die zuvor empirisch anhand bekannter Oberflächentexturen ermittelt werden muß. Ein Vergleich der Meßergebnisse nach der vorliegenden Erfindung einerseits mit Referenzproben anderseits, deren Periodenlänge nach der aufwendigen Tastschnittmethode ermittelt wurde, hat ergeben, daß die Entsprechung sehr gut ist und z.B. im Bereich von Periodenlängen von 70 bis 110 µm ein maximaler Fehler von ± 5 µm zu erwarten ist.

Der Abstand der Intensitätsmaxima kann zumindest in grober Näherung bereits auf der Mattscheibe 10 ermittelt werden. Beispielsweise kann die Mattscheibe mit einer Skalierung versehen sein und danach der Abstand der Intensitätsmaxima abgemessen werden. Wenn die Skalierung auf der Mattscheibe verschiebbar ist, kann ihr Nullpunkt mit einem, vorzugsweise dem hellsten Intensitätsmaximum in Übereinstimmung gebracht und dann der Abstand der Intensitätsmaxima an der Skalierung abgelesen werden. Auch ein Abgreifen des Abstandes der Intensitätsmaxima mit einem Stechzirkel und ein Übertragen dieses Maßes auf ein Lineal oder ein direktes Abgreifen mit den Spitzen einer Schiebelehre erscheint möglich. Diese einfachen Verfahren sind jedoch nur eingeschränkt oder als vorläufiges Verfahren zu empfehlen.

Das Handgerät 1 mit der visuellen Auswertung des Sekundärlichtes wird man zum manuellen und nachträglichen Kontrollieren fertiger Werkstücke verwenden, beispielsweise um drallbehaftete Werkstücke danach aussortieren und zur Nacharbeit zurückschicken zu können. Dies kann von einem Kontrolleur oder auch vom Maschinenführer einer Produktuionsanlage, auf der drallfreie Zapfenoberflächen hergestellt werden sollen, durchgeführt werden. In der Regel ist für das Selektieren drallfreier Werkstücke die visuelle und qualitative Feststellung der Welligkeit selber bzw. deren eindeutige Verneinung ausreichend, wogegen hierbei die Quantifizierung der Parameter einer aufgetretenen Welligkeit weniger wichtig ist.

Wie weiter oben schon erwähnt, lassen sich die Handgeräte mit "intelligenten" Fotodetektoren ausrüsten, die auch gewisse Meß- und Rechenoperation selbsttätig ausführen können. Derartig aufgerüstete Handgeräte können auf einem Display zumindest die Periodenlänge L und - bei vermehrter, integrierter Rechen- bzw. Auswerteleistung - auch die Tiefe T einer detektierten Welligkeit ausgeben. Zwar lassen sich solche Handgeräte, ohne ihre leichte Handhabbarkeit zu beeinträchtigen, auch dahin aufrüsten, festgestellte Parameterwerte auf Wunsch abzuspeichern, jedoch sind derartige Handgeräte in der Regel nicht für die Speicherung großer Datenmengen gedacht.

Denkbar ist auch der Einsatz des erfindungsgemäßen Welligkeitsmeßgerätes zur selbsttätigen Langzeit-Überwachung von Maschinenanlagen, auf denen drallfreie Zapfenoberflächen hergestellt werden sollen. Insbesondere die für einen stationären Einsatz vorgesehenen Welligkeitsmeßgeräte müssen mit einer das Sekundärlicht messenden und rechnenden Auswerte-Einheit ausgerüstet sein. Etwaige Produktions- bzw. Fehlerdaten, die mit einem in den Fertigungsprozeß integrierten Welligkeitsmeßgerät ermittelbar sind, sollten im Zusammenhang mit anderen Daten der Maschinenführung wie z.B. beim Außenrundschleifen die Werkstückdrehzahl, Schleifscheibendrehzahl, Schleifscheibenvorschub, Abrichtvorschub, Werkstückzahl nach dem letzten Abrichtvorgang u.a. in ihrer zeitlichen Zuordnung durch einen Produktionsdatenschreiber bzw. -speicher gesammelt, gespeichert und ausgewertet werden. Aus der Vielzahl der Daten und dem Umstand des Auftretens bzw. Nichtauftretens von Welligkeiten können dann empirisch Produktionserfahrungen gesammelt und kritische Parameter-Paarungen vermieden werden. Diese Online-Produktionsüberwachung mit einem leistungsfähigen und stationären Datenspeicher kann maschinenintegriert oder auch abseits von der unmittelbaren Produktionsanlage in einem ruhigeren Raum der Produktionsüberwachung erfolgen.

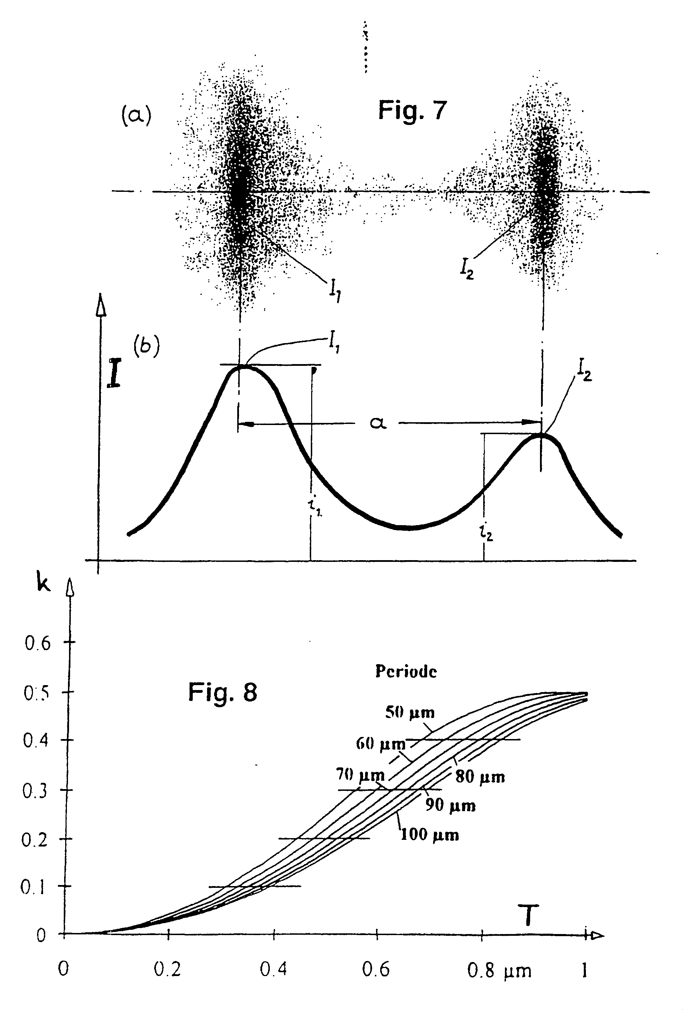

Bei der Welligkeitserfassung kann die Intensitätsverteilung des Sekundärlichtes 8 über deren Querschnittsfläche hinweg in einen datenverarbeitbaren Satz von Bilddaten umgewandelt werden, wie ein solcher beispielsweise im oberen Bildteil (a) von Figur 7 helligkeitsinvers dargestellt ist. Dieser Bilddatensatz kann in einem entsprechend vorprogrammierten Computer oder in einem "intelligenten" geräteintegrierten Fotodetektor hinsichtlich des Auftretens von Intenstätsmaxima I₁, I₂ ausgewertet werden, wobei diese als strukturelle Phänomene des sekundärlichtes mit den Großbuchstaben I₁, I₂ gekennzeichnet sind. Demgegenüber sind die Intensitätswerte in diesen Maxima mit kleinen Buchstaben i₁, i₂ in Bezug genommen. Da sich nicht alle Beugungsordnungen so deutlich wie in Figur 7 mit zwei klar erkennbaren Intensitätsmaxima, nämlich einem Hauptmaximum I₁ der nullten Beugungsordnung und einem Nebenmaximum I₂ der ersten Beugunsordnung darstellen, sondern diese häufig durch ein mehr oder weniger starkes Speckle-Rauschen überlagert sind, ist es zweckmäßig, die Bilddaten der Intensitätsverteilung des Sekundärlichtes zunächst einer Autokorrelation zu unterwerfen. Insbesondere schwächer ausgeprägte Drallstrukturen werden von stochastischen Rauhigkeiten etwa gleicher Größenordnung überlagert, so daß hier eine Autokorreleation besonders wichtig ist. Die Autokorrelationsfunktion stellt eine Glättung des Intensitätsverlaufes in den Beugungsordnungen dar, so daß die Maxima gut detektierbar sind. Aus den Werten der Autokorrelationsfunktion z.B. an den Stellen der nullten und der ersten Beugungsordnung können die Intensitätswerte i₁ und i₂ in diesen Beugungsordnungen ermittelt werden. Figur 7 zeigt den Verlauf einer solchen Autokorrelationsfunktion entlang einer Linie b-b (siehe Figur 7, Teil a) innerhalb der flächigen Intensitätsverteilung im Beugungsbild. Der Abstand a der beiden Maxima I₁ und I₂ sowie der jeweilige Funktionswert i₁ und i₂ der Autokorrelationsfunktion in den Intensitätsmaxima selber kann - wie gesagt - rechnerisch ermittelt werden.

Wie weiter oben bereits erwähnt, kann aus dem ermittelten Abstand a nach einer einfachen Reziprozitätsbeziehung die Periodenlänge L der Welligkeit näherungsweise errechnet werden. Das Beugungsbild liefert aber auch eine tiefenrelevante Information von der beugenden Welligkeitsstruktur der Werkstückoberfläche, und zwar dadurch, daß nicht nur die Wellenkämme, sondern auch die Wellentäler mit zur Entstehung des Beugungsbildes beitragen. Beispielsweise unterscheiden sich die Beugungsbilder zweier welliger Oberflächen mit untereinander gleicher Periodenlänge der Welligkeit aber unterschiedlicher Tiefe derselben voneinander. Aus den beiden Intensitätswerten i₁, i₂ der Haupt- und der Nebenintensität I₁, I₂ kann unter Berücksichtigung der Periodenlänge auf die Tiefe T der Wellentäler zwischen den Wellenkämmen 27 geschlossen werden. Dieses Ermittlungsverfahren ist nicht ganz so einfach, wie die Ermittlung der Periodenlänge. Um die Tiefe T der Wellentäler bestimmen zu können, muß aus den Intensitätswerten i₁, i₂ zunächst eine normierende Hilfsgröße k nach der Gleichung k = i₁ x i₂ /(i₁² + i₂²) ermittelt werden. Diese Beziehung - wie übrigens auch die weiter oben erwähnte näherungsweise Reziprozitätsbeziehung für die Periodenlänge L der Welligkeit - gilt unter gewissen idealisierenden, bei der vorliegend empfohlenen Geräteauslegung aber ohne weiteres gegebenen Vereinfachungen. Die Hilfsgröße k geht bei extrem geringen Intensitäten gegen Null. Je heller die erste Beugungsordnung ist und je mehr sich demzufolge deren Intensität der Intensität der nullten Beugungsordnung annähert, um so mehr nähert sich die Hilfsgröße k dem "Sättigungs"-wert von 0,5. Die meisten praktischen Fälle werden zwischen den eben erwähnten Extremen, also im Bereich der größten Spreizung der Diagrammlinien aus Figur 8 liegen. Unter Verwendung dieser Hilfsgröße und der zuvor schon ermittelten Periodenlänge L kann anhand der Graphik gemäß Figur 8, die auch als Datensatz in einem Computer abgespeichert und in die Rechnung einbezogen werden kann, die Tiefe T der Wellentäler ermittelt werden.

Ein Vergleich der so erhältlichen Ergebnisse der Wellentiefe T mit den nach der Tastschnittmethode gewonnenen Werten zeigt eine sehr gute Korrelation. Die erfindungsgemäß ermittelten Tiefen liegen jedoch bei geschliffenen Oberflächen gegenüber den Referenzwerten durchweg etwas niedriger, und zwar etwa bei 62 ± 5 % der Referenzwerte nach der Tastschnittmethode. Dieser Unterschied ist auf die unterschiedlichen Bandweitenbegrenzungen der beiden Verfahren zurückzuführen. Während die Tastschnittmessung auch Details der Schleiftopografie erfaßt, werden diese Details bei der streifenden Beleuchtung unterdrückt. Für den Fall, daß ein direkter Vergleich gefordert ist, müssen die erfindungsgemäß gefundenen Tiefenwerte mit einem Korrekturfaktor (bei geschliffenen Flächen etwa 1,6) multipliziert werden.

## Patentansprüche

1. Verfahren zum Erkennen kleiner, periodischer Welligkeiten (26) in geschliffenen Oberflächen (12), bei denen die Welligkeit (26) von feineren, steil eingekerbten, stochastischen Schleifstrukturen (24) überlagert sind, in welchem Verfahren zur isolierten Ermittlung der Welligkeit (26) die Oberfläche (12) unter einem konstanten Einfallwinkel innerhalb eines Winkelbereiches von 83±2° zur Oberflächennormalen (13) der Werkstückoberfläche (12) und annähernd quer zu den zu erwartenden periodischen Welligkeiten (26) mit monochromatischem, kohärentem Licht eines Primärlichtstrahls (7) beleuchtet wird und dadurch die Schleifstrukturen (24) abgeschattet (25) werden, wobei aufgrund einer dadurch bewirkten isolierten Ausleuchtung der Welligkeiten (26) mit dem Primärlichtstrahl (7) an deren lichtzu- und lichtabgewandten Seitenflanken und an deren Wellenkämmen (27) ein allein die Welligkeiten (26) repräsentierendes Beugungsbild der periodischen Welligkeiten (26) in dem von der Oberfläche zurückgeworfenen Sekundärlicht (8) erzeugt wird,
- welches entweder auf einer Mattscheibe (10) eingefangen wird, wobei deren Intensitätsverteilung visuell hinsichtlich des Auftretens von Intensitätsmaxima (I₁, I₂) ausgewertet wird, oder
- in welchem die Intensitätsverteilung des Sekundärlichtes (8) über die Bildfläche des Beugungsbildes hinweg ortsabhängig gemessen und die Messwerte hinsichtlich des Auftretens von Intensitätsmaxima (I₁, I₂) ausgewertet werden.

2. Verfahren nach Anspruch 1,
**dadurch gekennzeichnet**, d a ss
die Intensitätsverteilung des Sekundärlichtes (8) einer Autokorrelation unterworfen und die daraus gewonnene Autokorrelationsfunktion ausgewertet wird.

3. Verfahren nach Anspruch 1 oder 2,
**dadurch gekennzeichnet, dass**
der Abstand (a) benachbarter Intensitätsmaxima (I₁, I₂) ermittelt und daraus auf die Periodenlänge (L) der Welligkeit (26) geschlossen wird.

4. Verfahren nach einem der Ansprüche 1 bis 3,
**dadurch gekennzeichnet**, d a ss
die Intensitätswerte (i₁, i₂) benachbarter Intensitätsmaxima (I₁, I₂) ermittelt und daraus sowie aus der Periodenlänge (L) der Welligkeit (26) auf die Tiefe (T) der Wellentäler zwischen den Wellenkämmen (27) geschlossen wird.

5. Anordnung zum Erkennen kleiner, periodischer Welligkeiten (26) in geschliffenen Oberflächen (12) von Werkstücken (11), insbesondere zum Ausüben des verfahrens nach einem der Ansprüche 1 bis 4, umfassend die Gemeinsamkeit folgender Merkmale:
- eine auf die zu untersuchende Werkstückoberfläche (12) definiert aufsetzbare Messvorrichtung (1) mit einer Primärlichtquelle (6) zur Aussendung eines Primärstrahls (7) von monochromatischem, kohärentem Licht und mit einer den von der Werkstückoberfläche (12) zurückgeworfenen und als Streulichtkeule ausgebildeten Sekundärstrahl (8) einfangenden Sekundärlicht-Anzeige (10) in der Messvorrichtung (1),
- im Bereich der Aufsetzfläche (2) der Messvorrichtung (1) auf die Werkstückoberfläche (12) umschließt die Messvorrichtung (1) ein Austrittsfenster, in dessen seitlicher Begrenzung optische Umlenkelemente, wie Spiegel (14, 15) oder Umlenkprismen, für den Primärstrahl (7) und für den Sekundärstrahl (8) angeordnet sind, die den Primär - und den Sekundärstrahl (7, 8) in der Weise raumsparend abwinkeln, dass der vor dem Primärstrahl-Umlenkelement (14) liegende Strahlanteil des Primärstrahls (7) und der hinter dem Sekundärstrahl-Umlenkelement (15) liegende Strahlanteil des Sekundärstrahls (8) zumindest angenähert quer zur Werkstückoberfläche (12) ausgerichtet ist,
- im Bereich des Austritts des Primärlichtstrahls (7) aus dem Austrittsfenster ist der Primärstrahl (7) so gerichtet (16), dass er bei ordnungsgemäßem Aufsetzen der Messvorrichtung (1) mit dem Austrittsfenster auf das Werkstück (11) unter einem bestimmten Winkel innerhalb eines Bereiches von 83±2° auf die zu untersuchende Werkstückoberfläche (12) auftrifft,
- die Messvorrichtung (1) ist ferner so ausgebildet, dass sie nach dem Aufsetzen auf die Werkstückoberfläche (12) bezüglich des Primärstrahls (7) zumindest annähernd quer zu etwaigen zu erwartenden periodischen Welligkeiten (26) der Werkstückoberfläche (12) ausrichtbar ist,
- die Sekundärlicht-Anzeige (10) ist so angeordnet, dass sie die Streulichtkeule (8) unmittelbar, d.h. ohne Abbildungsoptik, als Beugungsbild der Welligkeit (26) derart emfängt, dass gegebenenfalls zwei benachbarte Intensitätsmaxima im Beugungsbild unterscheidbar sind.

6. Anordnung nach Anspruch 5,
**dadurch gekennzeichnet, dass**
die optischen Umlenkelemente (14, 15) derart angeordnet sind, dass der vor dem Primärstrahl-Umlenkelement (14) liegende Strahlanteil des Primärstrahls (7) einerseits und der hinter dem Sekundärstrahl-Umlenkelement (15) liegende Strahlanteil des Sekundärstrahls (8) andererseits sich gegenseitig überkreuzen.

7. Anordnung nach Anspruch 5,
**dadurch gekennzeichnet, dass**
die Sekundärlicht-Anzeige als eine die Intensitätsverteilung des Beugungsbildes visuell sichtbar machende Mattscheibe (10) ausgebildet ist.

8. Anordnung nach Anspruch 5,
**dadurch gekennzeichnet, dass**
die Sekundärlicht-Anzeige als eine die Intensitätsverteilung des Beugungsbildes messende, zeilenförmige oder flächendeckende Matrix einer Vielzahl lichtempfindlicher Sensoren ausgebildet ist.

9. Anordnung nach Anspruch 5,
**dadurch** g*e*kennzeichnet, dass
in der Sekundärlicht-Anzeige sowohl eine die Intensitätsverteilung des Beugungsbildes visuell sichtbar machende Mattscheibe (10) als auch eine die Intensitätsverteilung des Beugungsbildes messende, zeilenförmige oder flächendeckende Matrix aus einer Vielzahl lichtempfindlicher Sensoren angeordnet ist, denen der Sekundärstrahlengang über einen Strahlteiler oder über einen Klappspiegel zugänglich ist.

10. Anordnung nach Anspruch 9,
**dadurch gekennzeichnet, dass**
an die Messvorrichtung (1) eine digital arbeitende Kamera (23) adaptiert (22) ist, mit der die Intensitätsverteilung des Beugungsbildes des Sekundärstrahlenganges (8) registrierbar ist.

## Claims

1. A process for recognising small, periodic waves (26) in ground surfaces (12) in which the wave (26) is overlaid with finer, steeply notched, stochastic grinding structures (24), in which process the surface (12) is illuminated at a constant angle of incidence within an angle range of 83±2° to the nominal surface (13) of the tool surface (12) and approximately at right angles to the expected periodic waves (26) with monochromatic, coherent light from a primary light beam (7) in order to determine the wave (26) in isolation, thereby casting the grinding structures (24) in shadow (25), a diffraction pattern of the periodic waves (26) representing only these waves (26) being generated in the secondary light (8) reflected by the surface due to the resulting isolated illumination of the waves (26) by the primary light beam (7) on both the flanks facing towards and facing away from the light and at the peaks (27),
- which is either captured on a ground-glass disc (10), its intensity distribution being evaluated visually in terms of the occurrence of maxima of intensity (I₁, I₂), or
- in which the intensity distribution of the secondary light (8) beyond the perspective plane of the diffraction pattern is measured locally and the values obtained are evaluated in terms of the occurrence of maxima of intensity (I₁, I₂).

2. A process in accordance with claim 1,
**characterised in that**
the intensity distribution of the secondary light (8) is subject to autocorrelation and the autocorrelation function thus obtained is evaluated.

3. A process in accordance with claim 1 or 2,
**characterised in that**
the distance (a) between neighbouring maxima of intensity (I₁, I₂) is determined and used to deduce the period length (L) of the wave (26).

4. A process in accordance with one of claims 1 to 3,
**characterised in that**
the intensity values (i₁, i₂) of neighbouring maxima of intensity (I₁, I₂) are determined and are used along with the period length (L) of the wave (26) to deduce the depth (T) of the wave valleys between the wave peaks (27).

5. An arrangement for recognising small, periodic waves (26) in the ground surfaces (12) of workpieces (11), in particular for carrying out the process in accordance with one of claims 1 to 4, comprising the totality of the following features:
- a measuring device (1) which can be placed in a defined position on the workpiece surface (12) to be examined with a primary light source (6) to emit a primary beam (7) of monochromatic, coherent light and with a secondary light display (10) in the measuring device (1) which captures the secondary beam (8) reflected by the workpiece surface (12) which takes the form of a beam of scattered light,
- in the area of the surface (2) of the workpiece surface (12) on which the measuring device (1) is placed, the measuring device (1) comprises an exit window, positioned in the lateral delimitation of which are optical deflection elements such as mirrors (14, 15) or deviating prisms, for the primary beam (7) and for the secondary beam (8) which angle the primary and the secondary beams (7, 8) in a compact manner such that the beam component of the primary beam (7) lying ahead of the primary beam deflection element (14) and the beam component of the secondary beam lying behind the secondary beam deflection element (15) are oriented at least approximately at right angles to the workpiece surface (12),
- in the area in which the primary light beam (7) exits the exit window, the primary beam (7) is oriented (16) such that, when the exit window of the measuring device (1) is placed correctly on the workpiece (11), it occurs at a specific angle within a range of 83±2° in relation to the workpiece surface (12) to be examined,
- the measuring device (1) is further designed such that, once it has been placed on the workpiece surface (12), it can be oriented in relation to the primary beam (7) at least approximately at right angles to any periodic waves (26) expected on the workpiece surface (12),
- the secondary light display (10) is positioned such that it captures the beam of scattered light (8) directly, i.e. without a projection lens, as the diffraction pattern of the wave (26) in such a manner that in certain circumstances two neighbouring maxima of intensity can be distinguished in the diffraction pattern.

6. An arrangement in accordance with claim 5,
**characterised in that**
the optical deflection elements (14, 15) are positioned in such a manner that the beam component of the primary beam (7) lying ahead of the primary beam deflection element (14), on one hand, and the beam component of the secondary beam (8) lying behind the secondary beam deflection element (15), on the other, cross one another.

7. An arrangement in accordance with claim 5,
**characterised in that**
the secondary light display is designed as a ground-glass disc (10) which shows the intensity distribution of the diffraction pattern visually.

8. An arrangement in accordance with claim 5,
**characterised in that**
the secondary light display is designed as a linear or planar matrix of a multiplicity of light-sensitive sensors which measures the intensity distribution of the diffraction pattern.

9. An arrangement in accordance with claim 5,
**characterised in that**
the secondary light display contains both a ground-glass disc (10) which shows the intensity distribution of the diffraction pattern visually and a linear or planar matrix of a multiplicity of light-sensitive sensors which measures the intensity distribution of the diffraction pattern to which the path of the secondary beam is made available via a beam splitter or a folding mirror.

10. An arrangement in accordance with claim 9,
**characterised in that**
a digitally operating cameral (23) which can be used to register the intensity distribution of the diffraction pattern of the path (8) of the secondary beam is adapted (22) to the measuring device (1).

## Revendications

1. Procédé de détection de petites ondulations (26) périodiques sur des surfaces rectifiées (12), pour lesquelles les ondulations (26) sont superposées par des structures de rectification (24) stochastiques fines et rainurées avec une forte pente, dans lequel, pour la détermination isolée de l'ondulation (26), la surface (12) est éclairée à un angle d'incidence constant dans un intervalle d'angle de 83±2° par rapport à la normale de la surface (13) de la surface de la pièce usinée (12) et approximativement perpendiculaires aux ondulations périodiques (26) attendues, avec une lumière monochromatique et cohérente d'un rayon de lumière primaire (7) et les structures de rectification (24) sont ainsi ombrées (25), moyennant quoi, du fait de l'éclairage isolé des ondulations (26) ainsi réalisé à l'aide du rayon de lumière primaire (7) sur les flancs latéraux orientés de côté de la lumière ou du côté opposé à la lumière et sur les crêtes d'onde (27) duquel une image diffractée des ondulations périodiques (26) représentant uniquement les ondulations (26) est obtenu dans la lumière secondaire (8) réfléchie par la surface,
- qui est capturé soit sur un verre dépoli (10), moyennant quoi la répartition de son intensité est analysée visuellement en ce qui concerne les maxima d'intensité (I₁, I₂), ou
- dans lequel la répartition d'intensité de la lumière secondaire (8) sur la surface de l'image de réfraction est mesurée localement et les valeurs de mesure sont analysées en ce qui concerne les maxima d'intensité (I₁, I₂).

2. Procédé selon la revendication 1, **caractérisé en ce que** la répartition d'intensité de la lumière secondaire (8) est soumise à une auto-corrélation et la fonction d'auto-corrélation en résultant est analysée.

3. Procédé selon la revendication 1 ou 2, **caractérisé en ce que** l'intervalle (a) entre deux maxima d'intensité (I₁, I₂) consécutifs est déterminé et la période (L) de l'ondulation (26) en est déduite.

4. Procédé selon l'une des revendications 1 à 3, **caractérisé en ce que** les valeurs d'intensité (i₁, i₂) de deuil maxima d'intensité (I₁, I₂) consécutifs est déterminé et la profondeur (T) des creux d'onde en est déduite ainsi que de la période (L) de l'ondulation (26).

5. Dispositif de détection de petites ondulations périodiques (26) sur des surfaces rectifiées (12) de pièces usinées (11), notamment pour la réalisation du procédé selon l'une des revendications 1 à 4, comprenant l'ensemble des caractéristiques suivantes ;
- un dispositif de mesure (1) pouvant être posé sur la surface de la pièce usinée à examiner, avec une source de lumièra primaire (6) pour l'émission d'un rayon de lumière primaire (7) d'une lumière monochromatique cohérente et avec un affichage de lumière secondaire (10) capturant le rayon secondaire (8), constitué du lobe de lumière diffusée (8) réfléchi par la surface de la pièce usinée (12), dans le dispositif de mesure (1),
- le dispositif de mesure (1) comporte, au niveau de la surfaces d'appui (2) du dispositif de mesure (1) sur la surface de la pièce usinée (12), une fenêtre de sortie sur les côtés de laquelle sont disposés des éléments déflecteurs, comme des miroirs (14, 15) ou des prismes de déflection, pour le rayon primaire (7) et le rayon secondaire (8), qui dévient ainsi le rayon primaire et le rayon secondaire (7, 8) en économisant de la place, de façon à ce que la partie du rayon primaire (7) situé avant l'élément de déflection du rayon primaire (14) et la partie du rayon secondaire (8) située derrière l'élément de déflection du rayon secondaire (15) soient orientés de manière approximativement perpendiculaire à la surface de la pièce usinée (12),
- au niveau de la sortie du rayon de lumière primaire (7) de la fenêtre de sortie, le rayon primaire (7) est orienté (16) de façon à ce que, lorsque le dispositif de mesure (1) est disposé de manière appropriée avec la fenêtre de sortie sur la pièce usinée (11), il arrive avec un angle compris dans un intervalle de 83±2° sur la surface de la pièce usinée à examiner (12),
- le dispositif de mesure (1) est, en outre, conçu de telle sorts que, après la pose sur la surface de la pièce usinée (12), il puisse être orienté, en ce qui concerne le rayon primaire (7), de manière approximative perpendiculaire à l'ondulation périodique (26) attendue de la surface de la pièce usinée (12),
- l'affichage de lumière secondaire (10) est conçu de telle sorte qu'il reçoit directement, c'est-à-dire sans optique de reproduction, le lobe de lumière diffusée en tant qu'image diffractée de l'ondulation (26), de telle sorts que, le cas échéant, deux maxima d'intensité consécutifs puissent être distingués dans l'image diffractée.

6. Dispositif selon la revendication 5, **caractérisé en ce que** les éléments de déflection optiques (14, 15) gont disposés de façon à ce que la partie du rayon primaire (7) située avant l'élément de déflection du rayon primaire (14) d'une part, et la partie du rayon secondaire (8) situé derrière l'élément de déflection du rayon secondaire (15), d'autre part, se croisent mutuellement.

7. Dispositif selon la revendication 5, **caractérisé en ce que** l'affichage de la lumière secondaire est conçu comme un verre dépoli (10) rendant visible la répartition des intensités de l'image diffractée.

8. Dispositif selon la revendication 5, **caractérisé en ce que** l'affichage de la lumière secondaire est conçu comme une matrice de lignes ou recouvrant la surface d'une pluralité de capteurs photosensibles, mesurant la répartition des intensités de l'image diffractée.

9. Dispositif selon la revendication 5, **caractérisé en ce que**, dans l'affichage de la lumière secondaire, se trouve le verre dépoli (10) rendant visible la répartition des intensités de l'image diffractée ainsi que la matrice, en lignes ou recouvrant la surface, d'une pluralité de capteurs photosensibles, pour lesquels la trajectoire des rayons secondaires est accessible par l'intermédiaire d'un diviseur de rayon ou d'un miroir basculant.

10. Dispositif selon la revendication 9, **caractérisé en ce qu'**une caméra numérique (23) est adaptée (22) au dispositif de mesure (1), avec laquelle la répartition des intensités de l'image diffractée de la trajectoire du rayon secondaire (8) peut être enregistrée.
